# DEMANDE DE BREVET EUROPEEN

(11) **EP 4 376 295 A1**
(43) Date de publication de la demande: **29.05.2024**
(21) Numéro de dépôt: 23210756.5
(22) Date de dépôt: 17.11.2023
(51) Int. Cl.: H02S 50/00, H02S 50/10

(54) **DISPOSITIF DE SIMULATION D'OMBRAGE SUR UN PANNEAU PHOTOVOLTAÏQUE**

(30) Priorité: 25.11.2022 FR 2212360
(71) Demandeur: Commissariat à l'énergie atomique et aux énergies alternatives, 75015 Paris (FR)
(72) Inventeur: DERBALI, Imed, 38054 GRENOBLE CEDEX 09 (FR); RADDENZATI, Aurélien, 38054 GRENOBLE CEDEX 09 (FR)
(74) Mandataire: Brevalex

(57) **Abrégé**

Dispositif (100) de simulation d'ombrage dynamique sur au moins un panneau photovoltaïque (200), comprenant au moins :
- un film (104) destiné à être déplacé en regard d'une face avant (202) du panneau photovoltaïque, dont au moins une partie (106) est au moins partiellement opaque et représentative d'un motif d'ombrage destiné à être projeté sur la face avant du panneau photovoltaïque ;
- un dispositif (108, 110) de guidage du film vis-à-vis de la face avant du panneau photovoltaïque ;
- un dispositif (112, 114) d'actionnement configuré pour mettre en mouvement le film vis-à-vis de la face avant du panneau photovoltaïque.

## Description

### DOMAINE TECHNIQUE

L'invention concerne le domaine de la simulation d'ombrage sur les panneaux photovoltaïques, dans le but de caractériser électriquement ces panneaux dans une telle configuration.

### ÉTAT DE LA TECHNIQUE ANTÉRIEURE

L'étude de l'ombrage partiel des panneaux photovoltaïques est un enjeu important dans la conception d'architecture de ces panneaux. En effet, lorsqu'une ombre est projetée sur une partie d'un panneau photovoltaïque, la ou les cellules photovoltaïques de ce panneau se trouvant dans cette ombre limitent le courant de sortie de l'intégralité de la chaîne de cellules du panneau à laquelle elle appartient, en plus d'être sujet à une dégradation rapide liée à une forte polarisation inverse à leurs bornes. L'ombrage partiel d'une cellule génère également un échauffement localisé sur cette cellule, appelé « hotspot », qui est aussi responsable d'une dégradation de la cellule. Une protection par diode « bypass » ou par des architectures d'interconnexions particulières sont donc nécessaires afin d'éviter un vieillissement trop rapide des cellules.

Les motifs d'ombrage partiel utilisés dépendent de l'application à laquelle est intégré le module photovoltaïque. Différents scenarii sont à tester expérimentalement afin de vérifier la robustesse de l'architecture du module selon une exposition à de l'ombrage partiel, et établir un protocole de vieillissement sous ombrage.

Un premier moyen pour simuler un ombrage partiel d'un panneau photovoltaïque consiste à utiliser un cache opaque de taille variable posé directement sur le panneau à étudier, et le déplacer manuellement. Cette méthode présente l'avantage de couper totalement la lumière incidente au niveau des cellules masquées par le cache, mais ne permet pas de réaliser des motifs d'ombrage projetés de manière dynamique, c'est-à-dire se déplaçant sur le panneau et/ou changeant de forme et/ou d'opacité. Une intervention manuelle d'un opérateur est donc nécessaire pour toute modification du protocole.

Il existe également des systèmes utilisant des bâches déroulantes directement posées sur le panneau. Avec de tels systèmes, le nombre et la complexité des motifs d'ombrage possibles sont toutefois très limités. De tels systèmes ne sont pas adaptés pour simuler une projection d'ombre de manière dynamique sur le panneau.

Le document de H. Ziar et al., "Quantification of Shading Tolerability for Photovoltaic Modules," in IEEE Journal of Photovoltaics, vol. 7, no. 5, pp. 1390-1399,

Sept. 2017, décrit un équipement d'ombrage partiel d'un panneau photovoltaïque utilisant des caches opaques afin de créer différents motifs d'ombrage. La complexité des motifs d'ombrage réalisables avec un tel équipement est toutefois très limitée.

Un deuxième moyen pour réduire l'intensité lumineuse incidente sur un panneau photovoltaïque consiste à directement faire varier la puissance des lampes situées au-dessus du module à étudier, comme décrit dans le document M. A. AI Mamun et al., « Experimental investigation of the effect of partial shading on photovoltaic performance », Juin 2017, Renewable Power Génération, lET Volume 11(Issue 7),

p. 912 - 921. En jouant sur la puissance électrique envoyée à une partie des lampes, il est possible d'observer des effets d'ombrage sur les cellules. Le principal désavantage de cette technique est l'incapacité d'obtenir un noir total sur une partie du module photovoltaïque compte tenu de la propagation des faisceaux lumineux et de la diffusion latérale de la lumière en provenance des lampes. Il en découle une gestion peu précise des motifs d'ombrage réalisés.

### EXPOSÉ DE L'INVENTION

Un but de la présente invention est de proposer un dispositif de simulation d'ombrage dynamique sur au moins un panneau photovoltaïque ne présentant pas les inconvénients des dispositifs existants décrits ci-dessus.

Pour cela, la présente invention propose un dispositif de simulation d'ombrage dynamique sur au moins un panneau photovoltaïque, comprenant au moins :
- un film destiné à être déplacé en regard d'une face avant du panneau photovoltaïque, dont au moins une partie est au moins partiellement opaque et représentative d'un motif d'ombrage destiné à être projeté sur la face avant du panneau photovoltaïque ;
- un dispositif de guidage du film vis-à-vis de la face avant du panneau photovoltaïque ;
- un dispositif d'actionnement configuré pour mettre en mouvement le film vis-à-vis de la face avant du panneau photovoltaïque.

Ce dispositif permet de simuler un ombrage partiel ou total sur un panneau photovoltaïque, comprenant une ou plusieurs cellules photovoltaïques, et de projeter différents scénarii d'ombrage de manière dynamique sans modifier la source lumineuse incidente.

Le dispositif selon l'invention permet la réalisation de motifs d'ombrage pouvant être plus complexes que ceux réalisables avec des caches opaques fixes.

L'invention permet de générer un ombrage partiel d'au moins un panneau photovoltaïque par une méthode non destructrice sur le panneau photovoltaïque.

L'invention ne demande pas de modification de la source lumineuse incidente, celle-ci pouvant correspondre à la lumière du soleil lorsque le dispositif est utilisé en extérieur ou à celle d'une source de lumière autre que le soleil lorsque le dispositif est utilisé en intérieur.

Un tel dispositif peut être utilisé en intérieur ou en extérieur (par exemple dans une centrale solaire). Il peut être transportable et son installation est aisée.

La ou les ombres peuvent être projetées de manière dynamique par le dispositif, par exemple en simulant une vitesse de déplacement linéaire vis-à-vis du panneau photovoltaïque.

La partie du film au moins partiellement opaque peut laisser passer une partie de la lumière incidente, par exemple comprise entre 0 % et 80 % de la lumière reçue au niveau de cette partie du film.

Une projection d'ombre est qualifiée de dynamique lorsque l'intensité et/ou la forme et/ou la position de l'ombre change en fonction du temps lors de la projection sur le panneau photovoltaïque.

Le dispositif d'actionnement peut comporter au moins un moteur ou au moins un vérin.

Dans un premier exemple de réalisation, le dispositif de simulation d'ombrage dynamique peut être tel que :
- le dispositif d'actionnement comporte au moins un premier moteur ;
- le dispositif de guidage comporte des premier et deuxième arbres autour desquels le film est configuré pour être enroulé et déroulé ;
- le premier moteur est couplé au premier arbre.

Dans ce premier exemple de réalisation, le dispositif d'actionnement peut comporter en outre un deuxième moteur ou un enrouleur automatique, couplé au deuxième arbre. Dans un deuxième exemple de réalisation, le dispositif de simulation d'ombrage dynamique peut être tel que :
- le dispositif d'actionnement comporte au moins un premier moteur ;
- le dispositif de guidage comporte des premier, deuxième, troisième et quatrième arbres ;
- le premier moteur est couplé à l'un des premier, deuxième, troisième et quatrième arbres ;
- le film forme une bande sans fin guidée par les premier, deuxième, troisième et quatrième arbres ;
- les premier et deuxième arbres sont configurés pour guider le film en regard de la face avant du panneau photovoltaïque, et les troisième et quatrième arbres sont configurés pour guider le film en regard d'une face arrière, opposée à la face avant, du panneau photovoltaïque.

Dans un troisième exemple de réalisation, le dispositif de simulation d'ombrage dynamique peut être tel que le dispositif de guidage comporte des rails latéraux configurés pour guider en translation le film.

Le film peut comporter une couche de matériau transparent, et la partie du film au moins partiellement opaque peut être formée par au moins un élément au moins partiellement opaque disposé contre la couche de matériau transparent et solidarisé à la couche de matériau transparent de manière amovible. Dans ce cas, le motif de l'ombre ou des ombres projetées sur le panneau photovoltaïque peut être aisément modifié.

Le dispositif de simulation d'ombrage dynamique peut comporter en outre un châssis auquel le dispositif de guidage et le dispositif d'actionnement sont solidarisés.

Dans un premier mode de réalisation, le châssis peut former un support configuré pour qu'une face arrière du panneau photovoltaïque soit disposée sur le support.

Dans un deuxième mode de réalisation, le châssis peut comporter une ouverture configurée pour être disposée en regard de la face avant du panneau photovoltaïque, et telle que le film puisse être mis en mouvement en regard de la face avant du panneau photovoltaïque à travers l'ouverture.

Le dispositif de simulation d'ombrage dynamique peut comporter en outre une source lumineuse configurée pour illuminer une première face du film, et une deuxième face du film, opposée à la première face, pouvant être destinée à être déplacée en regard de la face avant du panneau photovoltaïque.

La source lumineuse peut être configurée pour émettre une lumière conforme au spectre solaire AM 1.5 et/ou avec une puissance comprise entre 200 W/m² et 2000 W/m².

Le dispositif de simulation d'ombrage peut comporter en outre un dispositif de mesure courant - tension configuré pour mesurer la caractéristique courant - tension du panneau photovoltaïque.

L'invention concerne également un procédé de caractérisation d'au moins un panneau photovoltaïque, comportant au moins les étapes suivantes :
- disposer un dispositif de simulation d'ombrage dynamique tel que décrit ci-dessus et le panneau photovoltaïque tels que le film du dispositif de simulation d'ombrage dynamique soit disposé en regard d'une face avant du panneau photovoltaïque ;
- mettre en mouvement le film du dispositif de simulation d'ombrage dynamique ;
- mesurer la caractéristique courant - tension du panneau photovoltaïque par le dispositif de mesure courant - tension du dispositif de simulation d'ombrage dynamique, simultanément à la mise en mouvement du film du dispositif de simulation d'ombrage dynamique.

Dans l'ensemble du document, le terme « sur » est utilisé sans distinction de l'orientation dans l'espace de l'élément auquel se rapporte ce terme. Par exemple, dans la caractéristique « sur une face du premier substrat », cette face du premier substrat n'est pas nécessairement orientée vers le haut mais peut correspondre à une face orientée selon n'importe quelle direction. En outre, la disposition d'un premier élément sur un deuxième élément doit être comprise comme pouvant correspondre à la disposition du premier élément directement contre le deuxième élément, sans aucun élément intermédiaire entre les premier et deuxième éléments, ou bien comme pouvant correspondre à la disposition du premier élément sur le deuxième élément avec un ou plusieurs éléments intermédiaires disposés entre les premier et deuxième éléments.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
[Fig. 1] et
   [Fig. 2] représentent schématiquement un dispositif de simulation d'ombrage dynamique, objet de la présente invention, selon un premier mode de réalisation ;
[Fig. 3] et
   [Fig. 4] représentent schématiquement un dispositif de simulation d'ombrage dynamique, objet de la présente invention, selon différentes variantes du premier mode de réalisation ;
[Fig. 5] représente schématiquement un dispositif de simulation d'ombrage dynamique, objet de la présente invention, selon un deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSE DETAILLE DE MODES DE REALISATION PARTICULIERS

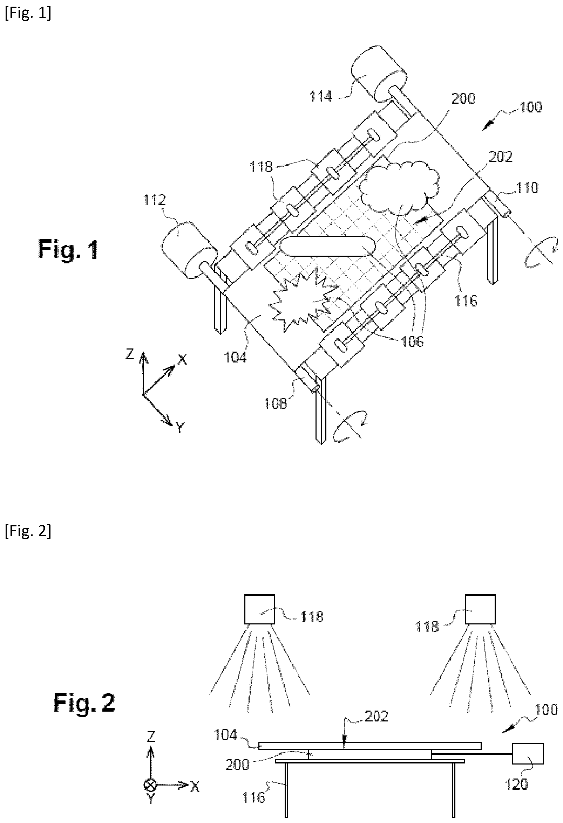

Un exemple de réalisation d'un dispositif 100 de simulation d'ombrage dynamique sur au moins un panneau, ou module, photovoltaïque 200, selon un premier mode de réalisation, est décrit ci-dessous en lien avec les figures 1 et 2. Sur la figure 2, une partie seulement des éléments du dispositif 100 sont représentés. Le dispositif 100 peut être utilisé pour tout type de panneau photovoltaïque 200, c'est-à-dire comportant une ou des cellules photovoltaïques à base de semi-conducteurs, de matériaux organiques, hybrides, etc.

Le dispositif 100 comporte un film 104, par exemple de forme rectangulaire, destiné à être déplacé en regard d'une face avant 202 du panneau photovoltaïque 200. La face avant 202 du panneau photovoltaïque 200 correspond à la face destinée à recevoir la lumière à partir de laquelle le panneau photovoltaïque 200 produit de l'électricité.

Au moins une partie du film 104 est au moins partiellement opaque et forme un motif d'une ou plusieurs ombres destinées à être projetées sur la face avant 202 du panneau photovoltaïque 200. Le film 104 est typiquement une couche ou une surface, de matière souple telle qu'un matériau plastique ou polymère, et qui peut être pliable et en particulier enroulable.

Dans l'exemple de réalisation décrit, le film 104 est formé d'une couche de matériau transparent, par exemple à base de plastique ou polymère tel que du PET (poly(téréphtalate) d'éthylène, sur laquelle des portions 106 de matériau opaque sont solidarisées. Les formes, les motifs et les degrés d'opacité de ces portions 106 sont choisis en fonction des motifs d'ombre destinés à être projetés sur la face avant 202 du panneau photovoltaïque 200. Sur la figure 1, le panneau photovoltaïque 200 est visible à travers les parties transparentes du film 104.

Le ou les matériaux du film 104, c'est-à-dire de la couche transparente et des portions 106 dans l'exemple décrit ci-dessus, sont choisis tels que le film 104 ait une bonne résistance mécanique et une bonne résistance aux rayonnements UV et thermique, par exemple tel qu'il puisse supporter des températures comprises entre 50°C et 80°C.

De manière avantageuse, les portions 106 sont solidarisées à la couche de matériau transparent du film 104 de manière amovible afin de pouvoir modifier aisément le ou les motifs d'ombrage projetés sur la face avant 202 du panneau photovoltaïque 200. La fixation des portions 106 sur la couche de matériau transparent est par exemple assurée par un adhésif ou par aimant.

En variante, il est également possible que le film 104 comporte seulement une couche de matériau qui inclut une ou plusieurs parties transparentes et une ou plusieurs parties au moins partiellement opaques. Dans ce cas, le ou les parties au moins partiellement opaques du film 104 ne sont pas amovibles.

Le dispositif 100 comporte également un dispositif de guidage du film 104 vis-à-vis de la face avant 202 du panneau photovoltaïque 200, ainsi qu'un dispositif d'actionnement configuré pour mettre en mouvement le film 104 vis-à-vis de la face avant 202 du panneau photovoltaïque 200. Dans l'exemple de réalisation décrit, le dispositif de guidage correspond à des premier et deuxième arbres 108, 110 autour desquels le film 104 est configuré pour être enroulé et déroulé, et le dispositif d'actionnement correspond à des premier et deuxième moteurs 112, 114, le premier moteur 112 étant couplé au premier arbre 108 et le deuxième moteur 114 étant couplé au deuxième arbre 110. Les moteurs 112, 114 sont par exemple des moteurs électriques pas à pas à double sens de rotation, ce qui permet de simuler sur le panneau photovoltaïque 200 un ombrage se déplaçant selon l'une ou l'autre de deux directions opposées (parallèlement à l'axe X sur l'exemple des figures 1 et 2). La vitesse de rotation des moteurs 112, 114 peut être variable et programmable, ce qui permet par exemple au dispositif 100 de simuler un défilement d'ombres sur le panneau photovoltaïque 200 à différentes vitesses, par exemple entre 0 et 50 km/h, voire entre 0 et 130 km/h.

De manière avantageuse, les arbres 108, 110 et les moteurs 112, 114 sont utilisés de manière garder le film 104 en tension afin que la distance entre le film 104 et la face avant 202 du panneau photovoltaïque 200 (distance parallèle à l'axe Z représenté sur les figures 1 et 2) soit sensiblement constante, et par exemple égale à quelques millimètres. En outre, le film 104 a par exemple une longueur (dimension parallèle à l'axe X représenté sur les figures 1 et 2) totale, c'est-à-dire lorsqu'il est complètement déroulé, comprise entre 4 m et 30 m, voire plus.

Le dispositif 100 comporte en outre un châssis 116 auquel le dispositif de guidage, c'est-à-dire les arbres 108, 110, et le dispositif d'actionnement, c'est-à-dire les moteurs 112, 114, sont solidarisés. Dans le premier mode de réalisation, le châssis 116 forme un support configuré pour qu'une face arrière du panneau photovoltaïque 200 soit disposée sur ce support. Ce châssis 116 correspond par exemple à une table stabilisée sur laquelle le panneau photovoltaïque 200 est destiné à être posé. Selon un exemple de réalisation, le support formé par le châssis 116 peut former une surface sensiblement parallèle au sol sur laquelle le panneau photovoltaïque 200 est destiné à être disposé. Le châssis 116 peut être mobile ou fixe, et peut supporter un ou plusieurs panneaux photovoltaïques 200. D'autres types de châssis 116 sont envisageables, que le dispositif 100 soit utilisé en extérieur ou en intérieur.

Lorsque le dispositif 100 est destiné à être utilisé en intérieur, le dispositif 100 comporte en outre une source lumineuse configurée pour illuminer une première face du film 104 opposée à celle destinée à être déplacée en regard de la face avant 202 du panneau photovoltaïque 200. Sur l'exemple des figures 1 et 2, cette source lumineuse est formée par plusieurs lampes 118 disposées au-dessus du film 104 de manière à ce que la lumière émise par les lampes 118 traversent les parties transparentes du film 104 et atteignent la face avant 202 du panneau photovoltaïque 200, et qu'une partie de cette lumière soit bloquée au moins partiellement par les portions 106 pour former les ombres sur la face avant 202 du panneau photovoltaïque 200.

Dans une configuration avantageuse, la source lumineuse est configurée pour émettre une lumière conforme au spectre solaire AM 1.5 et/ou avec une puissance comprise entre 200 W/m² et 2000 W/m², et par exemple égale à 1000 W/m². Selon un exemple de réalisation, la source lumineuse correspond à une ou plusieurs lampes 118 à Xénon couplée(s) à au moins un filtre (par exemple pour former un simulateur solaire de classe AAA).

Lorsque le dispositif 100 est destiné à être utilisé en extérieur, le dispositif 100 peut ne pas comporter la source lumineuse, et la lumière éclairant le panneau photovoltaïque 200 correspond dans ce cas à la lumière du soleil.

Le dispositif 100 comporte en outre un dispositif 120 de mesure courant - tension, ou mesure I-V, configuré pour mesurer la caractéristique courant - tension du panneau photovoltaïque 200. Le dispositif 120 correspond par exemple à une unité de source et de mesures (ou SMU pour « Source Measure Unit » en anglais) générant un balayage de tension aux bornes du panneau photovoltaïque 200 dans un intervalle compris entre 0 V et Voc (tension en circuit ouvert) et mesurant le courant du panneau photovoltaïque 200 en fonction de la tension appliquée. La caractéristique courant-tension du panneau photovoltaïque 200 peut alors être tracée, ce qui permet de calculer les différentes propriétés intrinsèques du panneau photovoltaïque 200 comme par exemple sa résistance série / parallèle, le Voc, Isc (courant court-circuit), le Fill Factor (Facteur de Forme), etc. Le dispositif 120 peut être piloté par un programme informatique sur un ordinateur relié par un câble de communication. Le programme peut lancer la mesure courant-tension de manière continue ou à un intervalle de temps régulier. Cette mesure peut être traitée en temps réel par un programme afin d'en extraire les différents paramètres intrinsèques du panneau photovoltaïque 200 en fonction du taux d'ombrage. Le programme peut également commander le dispositif d'actionnement (c'est-à-dire les moteurs 112, 114 dans l'exemple précédemment décrit) pour mettre en mouvement le film 104.

Dans une configuration avantageuse, en considérant que le film 104 est déroulé au-dessus du panneau photovoltaïque 200 parallèlement à sa longueur, la largeur (dimension selon l'axe Y représenté sur les figures 1 et 2) du film 104 est supérieure ou égale à celle du panneau photovoltaïque 200 afin que le ou les motifs d'ombre formés par la ou les portions 106 soient projetés sur toutes les cellules photovoltaïque du panneau 200. Il est également envisageable que la largeur du film 104 soit supérieure ou égale à celles de plusieurs panneaux photovoltaïques 200 disposés les uns à côté des autres, ce qui permet de caractériser simultanément plusieurs panneaux photovoltaïques 200.

Il est également envisageable d'utiliser un dispositif 100 dont le film 104 ait une largeur inférieure à celle du panneau photovoltaïque 200, le ou les motifs d'ombre étant dans ce cas projetés sur une partie seulement des cellules photovoltaïque du panneau photovoltaïque 200.

Dans une autre configuration, le dispositif 100 peut comporter plusieurs films 104 chacun destiné à être mis en mouvement au-dessus d'au moins une partie d'un panneau photovoltaïque 200 associé ou de plusieurs panneaux photovoltaïques 200, ou chacun destiné à être mis en mouvement sur une partie d'un même panneau photovoltaïque 200. Dans l'exemple de réalisation décrit ci-dessus, le film 104 est mis en mouvement tel qu'il s'enroule autour d'un des arbres 108, 110 et qu'il se déroule depuis l'autre des arbres 108, 110. Ainsi, dans cet exemple de réalisation, le film 104 reste toujours au-dessus du panneau photovoltaïque 200, ce qui permet d'utiliser le dispositif 100 même lorsque des éléments, par exemple des tuyaux, se trouvent sous le panneau photovoltaïque 200.

Dans l'exemple de réalisation précédemment décrit, le dispositif 100 comporte deux moteurs 112, 114 chacun couplé à l'un des arbres 108, 110. En variante, le dispositif 100 peut comporter un seul moteur couplé à l'un des deux arbres 108, 110, l'autre arbre étant couplé à un dispositif de type enrouleur automatique assurant l'enroulement du film 104 autour de cet autre arbre.

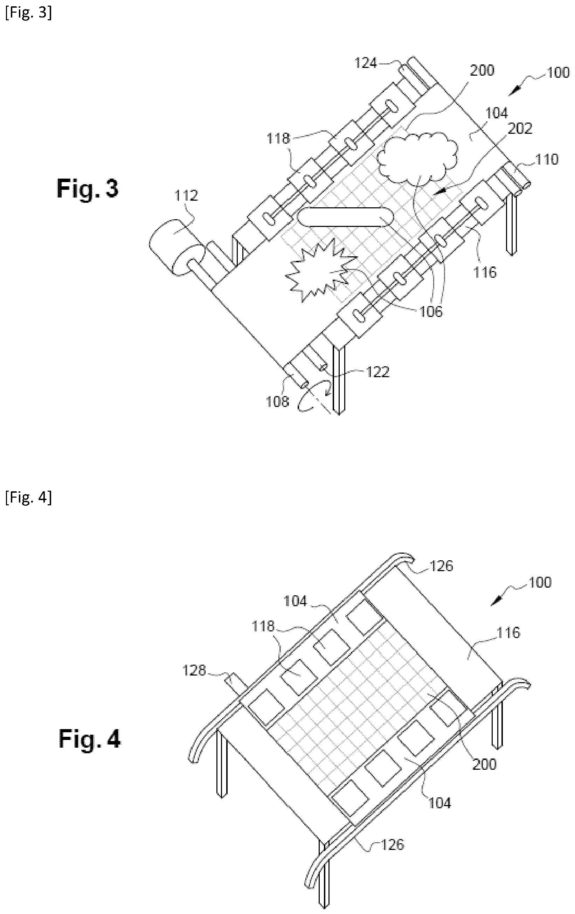

Dans une variante représentée sur la figure 3, le dispositif 100 comporte, en plus des premier et deuxième arbres 108, 110, des troisième et quatrième arbres 122, 124 coopérant pour guider le film 104 qui forme une bande sans fin guidée par les arbres 108, 110, 122, 124. Dans cette variante, les premier et deuxième arbres 108, 110 sont configurés pour guider le film 104 en regard de la face avant 202 du panneau photovoltaïque 200, et les troisième et quatrième arbres 122, 124 sont configurés pourguider le film 104 en regard d'une face arrière, opposée à la face avant, du panneau photovoltaïque 200. Dans cette variante, la longueur du film 104 est par exemple comprise entre 4 m et 10 m.

Dans l'exemple de réalisation représenté sur la figure 3, le dispositif 100 comporte un seul moteur 112 qui est couplé au premier arbre 108. Il est toutefois possible que le dispositif 100 comporte un ou plusieurs autres moteurs couplés à un ou plusieurs des autres arbres 110, 122, 124.

Dans une autre variante représentée sur la figure 4, le dispositif 100 ne comporte pas d'arbres pour guider le film 104, mais des rails latéraux 126 configurés pour guider en translation le film 104 au-dessus de la face avant 202 du panneau photovoltaïque 200. De plus, dans l'exemple représenté sur la figure 4, le film 104 est mis en mouvement non par des moteurs faisant tourner un ou plusieurs arbres, mais par un ou plusieurs vérins 128 guidant le film 104 en translation dans les rails 126.

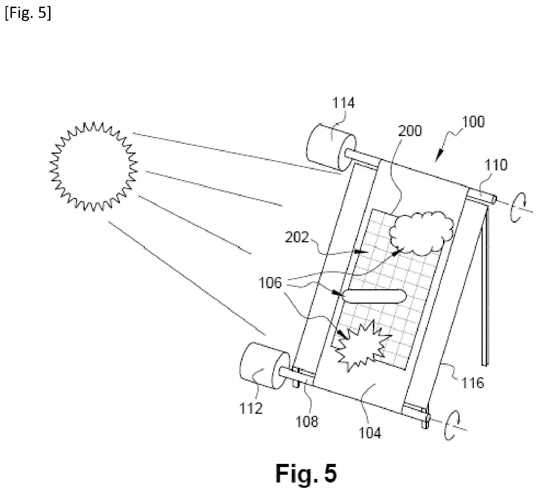

Un exemple de réalisation d'un dispositif 100 de simulation d'ombrage sur au moins un panneau, ou module, photovoltaïque 200, selon un deuxième mode de réalisation, est décrit ci-dessous en lien avec la figure 5.

Dans ce deuxième mode de réalisation, le dispositif 100 est destiné à être utilisé en extérieur, et ne comporte pas les lampes 118. La ou les ombres sont projetées sur le panneau photovoltaïque 200 grâce à la lumière du soleil qui traverse le film 104.

En outre, dans ce deuxième mode de réalisation, le châssis 116 comporte une ouverture (non visible sur la figure 5) configurée pour être disposée en regard de la face avant 202 du panneau photovoltaïque 200, et pour que le film 104 puisse être mis en mouvement en regard de la face avant 202 du panneau photovoltaïque 200 à travers l'ouverture.

Enfin, dans l'exemple représenté sur la figure 5, le panneau photovoltaïque 200 n'est pas disposé parallèlement au sol. Le châssis 116 est incliné tel que le film 104 puisse être mis en mouvement parallèlement à la face avant 202 du panneau photovoltaïque 200.

Pour caractériser le panneau photovoltaïque 200, quel que soit le mode de réalisation ou la variante du dispositif 100, les étapes suivantes peuvent être mises en oeuvre :
- disposer le dispositif 100 et le panneau photovoltaïque 200 tels que le film 104 du dispositif 100 soit disposé en regard d'une face avant 202 du panneau photovoltaïque 200 ;
- mise en mouvement du film 104 du dispositif 100 ;
- mesurer la caractéristique courant - tension du panneau photovoltaïque 200 par le dispositif de mesure courant - tension 120 du dispositif 100, simultanément à la mise en mouvement du film 104 du dispositif 100.

## Revendications

1. Dispositif (100) de simulation d'ombrage dynamique sur au moins un panneau photovoltaïque (200) formé de cellules photovoltaïques, comprenant au moins :
- un film (104) destiné à être déplacé en regard d'une face avant (202) du panneau photovoltaïque (200), dont au moins une partie (106) est au moins partiellement opaque et représentative d'un motif d'ombrage destiné à être projeté sur la face avant (202) du panneau photovoltaïque (200) ;
- un dispositif (108, 110, 122, 124, 126) de guidage du film (104) vis-à-vis de la face avant (202) du panneau photovoltaïque (200) ;
- un dispositif (112, 114, 128) d'actionnement configuré pour mettre en mouvement le film (104) vis-à-vis de la face avant (202) du panneau photovoltaïque (200) et d'au moins plusieurs cellules photovoltaïques de ce panneau photovoltaïque (200).

2. Dispositif (100) de simulation d'ombrage dynamique selon la revendication 1, dans lequel le dispositif d'actionnement comporte au moins un moteur (112, 114) ou au moins un vérin (128).

3. Dispositif (100) de simulation d'ombrage dynamique selon la revendication 2, dans lequel :
- le dispositif d'actionnement comporte au moins un premier moteur (112) ;
- le dispositif de guidage comporte des premier et deuxième arbres (108, 110) autour desquels le film (104) est configuré pour être enroulé et déroulé ;
- le premier moteur (112) est couplé au premier arbre (108).

4. Dispositif (100) de simulation d'ombrage dynamique selon la revendication 3, dans lequel le dispositif d'actionnement comporte en outre un deuxième moteur (114) ou un enrouleur automatique, couplé au deuxième arbre (110).

5. Dispositif (100) de simulation d'ombrage dynamique selon la revendication 2, dans lequel :
- le dispositif d'actionnement comporte au moins un premier moteur (112) ;
- le dispositif de guidage comporte des premier, deuxième, troisième et quatrième arbres (108, 110, 122, 124) ;
- le premier moteur (112) est couplé à l'un des premier, deuxième, troisième et quatrième arbres (108, 110, 122, 124) ;
- le film (104) forme une bande sans fin guidée par les premier, deuxième, troisième et quatrième arbres (108, 110, 122, 124) ;
- les premier et deuxième arbres (108, 110) sont configurés pour guider le film (104) en regard de la face avant (202) du panneau photovoltaïque (200), et les troisième et quatrième arbres (122, 124) sont configurés pour guider le film (104) en regard d'une face arrière, opposée à la face avant (202), du panneau photovoltaïque (200).

6. Dispositif (100) de simulation d'ombrage dynamique selon la revendication 2, dans lequel le dispositif de guidage comporte des rails latéraux (126) configurés pour guider en translation le film (104).

7. Dispositif (100) de simulation d'ombrage dynamique selon l'une des revendications précédentes, dans lequel le film (104) comporte une couche de matériau transparent, et la partie du film au moins partiellement opaque est formée par au moins un élément (106) au moins partiellement opaque disposé contre la couche de matériau transparent et solidarisé à la couche de matériau transparent de manière amovible.

8. Dispositif (100) de simulation d'ombrage dynamique selon l'une des revendications précédentes, comportant en outre un châssis (116) auquel le dispositif de guidage (108, 110, 122, 124, 126) et le dispositif d'actionnement (112, 114, 128) sont solidarisés.

9. Dispositif (100) de simulation d'ombrage dynamique selon la revendication 8, dans lequel le châssis (116) forme un support configuré pour qu'une face arrière du panneau photovoltaïque (200) soit disposée sur le support.

10. Dispositif (100) de simulation d'ombrage dynamique selon la revendication 8, dans lequel le châssis (116) comporte une ouverture configurée pour être disposée en regard de la face avant (202) du panneau photovoltaïque (200), et telle que le film (104) puisse être mis en mouvement en regard de la face avant (202) du panneau photovoltaïque (200) à travers l'ouverture.

11. Dispositif (100) de simulation d'ombrage dynamique selon l'une des revendications précédentes, comportant en outre une source lumineuse (118) configurée pour illuminer une première face du film (104), et dans lequel une deuxième face du film (104), opposée à la première face, est destinée à être déplacée en regard de la face avant (202) du panneau photovoltaïque (200).

12. Dispositif (100) de simulation d'ombrage dynamique selon la revendication 11, dans lequel la source lumineuse (118) est configurée pour émettre une lumière conforme au spectre solaire AM 1.5 et/ou avec une puissance comprise entre 200 W/m² et 2000 W/m².

13. Dispositif (100) de simulation d'ombrage dynamique selon l'une des revendications précédentes, comportant en outre un dispositif (120) de mesure courant - tension configuré pour mesurer la caractéristique courant - tension du panneau photovoltaïque (200).

14. Procédé de caractérisation d'au moins un panneau photovoltaïque (200), comportant au moins les étapes suivantes :
- disposer un dispositif (100) de simulation d'ombrage dynamique selon la revendication 13 et le panneau photovoltaïque (200) tels que le film (104) du dispositif (100) de simulation d'ombrage dynamique soit disposé en regard d'une face avant (202) du panneau photovoltaïque (200) ;
- mettre en mouvement le film (104) du dispositif (100) de simulation d'ombrage dynamique ;
- mesurer la caractéristique courant - tension du panneau photovoltaïque (200) par le dispositif (120) de mesure courant - tension du dispositif (100) de simulation d'ombrage dynamique, simultanément à la mise en mouvement du film (104) du dispositif (100) de simulation d'ombrage dynamique.
